## Europäisches Patentamt

## European Patent Office

## Office européen des brevets

(11) Veröffentlichungsnummer: **0 119 982**
**A2**

(12) ## EUROPÄISCHE PATENTANMELDUNG

(21) Anmeldenummer: **84890024.7**

(22) Anmeldetag: **30.01.84**

(51) Int. Cl.³: **H 01 B 1/24, C 08 J 5/18**

(30) Priorität: **11.02.83 AT 477/83**

(43) Veröffentlichungstag der Anmeldung: **26.09.84** Patentblatt **84/39**

(84) Benannte Vertragsstaaten: **BE DE FR GB IT LU NL SE**

(71) Anmelder: **Chemiefaser Lenzing Aktiengesellschaft, A-4860 Lenzing (AT)**

(72) Erfinder: **Zenker, Edmund, Dipl.-Ing. Dr., Schwarzstrasse 7/8, A-4840 Vöcklabruck (AT)**
Erfinder: **Weinrotter, Klaus, Dipl.-Ing. Dr., Edisonstrasse 3, A-4840 Vöcklabruck (AT)**
Erfinder: **Reinmüller, Reinhard, Dipl.-Ing., Stelzhamerstrasse 2/1, A-4850 Timelkam (AT)**
Erfinder: **Neudorfer, Alois, Hamburgerstrasse 9/1, A-4840 Vöcklabruck (AT)**
Erfinder: **Gaibinger, Josef, Europahof 6, A-4840 Vöcklabruck (AT)**

(74) Vertreter: **Wolfram, Gustav, Dipl.-Ing., Schwindgasse 7 P.O. Box 205, A-1041 Wien (AT)**

(54) **Monoaxial verstreckte Folien oder Bändchen auf Kunststoffbasis und Verfahren zu ihrer Herstellung.**

(57) Diese Folien oder Bändchen weisen einen Gehalt an Kohlenstoffteilchen in der Kunststoffmatrix auf.

Zwecks optimaler Kombination von elektrischen leitfähigkeitswerten und mechanischen Eigenschaften weisen die Folien oder Bändchen
— einen Gehalt von 8 bis 50% Masse, vorzugsweise 8 bis 30% Masse, an elektrisch leitfähigem, in der Matrix dispergiertem Russ,
— einen Oberflächenwiderstand von weniger als $10^8\ \Omega$,
— Festigkeitswerte in Verstreckungsrichtung grösser als 50 N/mm² und
— Dehnungswerte in Verstreckungsrichtung von mehr als 20%
auf.

Sie werden hergestellt, indem Folien oder Bändchen mit einer Ausgangsstärke von 40 bis 1000 µm aus Polyolefin-Homo- oder Copolymerisaten oder aus Mischungen davon mit darin in einer Menge von 8 bis 50% Masse, vorzugsweise 8 bis 30% Masse, dispergiert enthaltenen elektrisch leitfähigen Kohlenstoffteilchen bei Temperaturen zwischen 50 und 180° C und einem Streckverhältnis zwischen 1 : 1,2 und 1 : 10, vorzugsweise zwischen 1 : 1,6 und 1 : 4,0, monoaxial ein- oder mehrstufig verstreckt werden, worauf eine erhaltene verstreckte Folie gewünschtenfalls zu Bändchen zerschnitten wird.

## Monoaxial verstreckte Folien oder Bändchen auf Kunststoffbasis und Verfahren zu ihrer Herstellung

Die Erfindung betrifft monoaxial verstreckte Folien oder Bändchen auf Kunststoffbasis mit einem Gehalt an Kohlenstoffteilchen in der Kunststoffmatrix sowie ein Verfahren zu deren Herstellung.

Übliche verstreckte Folien oder Bändchen aus Kunststoffen weisen zwar in der Regel gute mechanische Eigenschaften auf, sie sind jedoch aufgrund ihres hohen Oberflächenwiderstandes bzw. Durchgangswiderstandes stark elektrostatisch aufladbar. Der nach DIN 53 482, 53 486 und 54 345 bestimmte Oberflächenwiderstand liegt beispielsweise bei Polyolefinfolien im Bereich $10^{13}$ bis $10^{16} \Omega$. Für viele Anwendungszwecke stellt die Eigenschaft der hohen Aufladbarkeit einen erheblichen Nachteil dar. Es ist bekannt, Polymere durch Dispergieren feinteiliger, elektrisch leitfähiger Füllstoffe in der Polymermatrix so auszurüsten, daß deren Oberflächen- bzw. Durchgangswiderstände bis auf $10^2 \Omega$ bzw. $\Omega$. cm reduziert werden. Diese Werkstoffe können somit als "elektrisch leitfähig" bezeichnet werden. Als leitfähige Füllstoffe eignen sich vorwiegend bestimmte Ruße, Graphit, Metallpulver, leitfähige Metallsalze und -oxide, aber auch bor- oder phosphordotiertes Silizium oder Germanium.

Die Auswahl des leitfähigen Füllstoffes hängt von dem einzusetzenden Polymerisat ab, insbesondere wird sie durch die Verträglichkeit von Füllstoff und Polymerisat bestimmt. Da Metalle beispielsweise in Polyolefinen Abbaureaktionen katalysieren, finden für die sogenannte innere leitfähige Ausrüstung dieser Polymere vor allem bestimmte Ruße und Graphit praktische Verwendung.

Zur Erzielung homogener, niedriger Widerstandswerte ist gegenseitiges Berühren der leitfähigen Additivteilchen notwendig, weswegen diese Füllstoffe in relativ hohen Konzentrationen in das Matrix-Material eingebettet werden müssen. Infolge des hohen Füllstoffanteiles werden aber die mechanischen Eigenschaften des Matrix-Materials fast immer drastisch verschlechtert. Bei niedrigeren Oberflächenwiderstandswerten als $10^6$ $\Omega$ weisen bekannte Folien oder Bändchen dieser Art beispielsweise nur sehr geringe Festigkeitswerte von etwa 10 bis 20 N/mm$^2$ auf.

In der DE-OS 3 034 747 werden leitfähige Polymermischungen auf Basis von Thermoplasten, Elastomeren und thermoplastischen Kautschuken mit 25 bis 35 % eines Rußes von 100 - 400 m$^2$ Oberfläche/g und 1 - 3 % eines Rußes mit einer Oberfläche von mehr als 900 m$^2$/g zur Ex-trusion von inneren und/oder äußeren Leitschichten in Mittel- und Hochspannungskabeln beschrieben.

Die DE-OS 2 948 281 betrifft eine elektrische Schaltung und Schaltungsschutzeinrichtung mit niedrigem Widerstand bei niedrigen Temperaturen und hohem Widerstand bei hohen Temperaturen, wobei eine leitfähige Polymermasse mit PTC-Verhalten (mit positivem Temperatur-Koeffizienten des Widerstandes) und einem spezifischen Durchgangswiderstand von weniger als 10 $\Omega$ . cm verwendet wird.

Auch rußgefüllte elektrisch leitende Polymermassen mit negativem Temperatur-Koeffizienten (NTC-Verhalten) sowie mit von der Temperatur weitgehend unabhängigem Widerstand (ZTC-/¯zero temperature coefficient-_/Ver-halten) wurden bereits vorgeschlagen. Kunststoffe mit PTC-, NTC- oder ZTC-Verhalten finden als Leiter in selbstregulierenden Heizungen, als Regelkreis-Kontrollen oder zur Kontrolle der Feldstärke verbreitet Anwendung.

In den meisten Fällen ist das als Band, Folie, extrudiertes Profil oder als formgepreßter Gegenstand vorliegende polymere Material vorzugsweise mittels $\beta$- oder $\gamma$-Strahlung oder chemisch vernetzt, wodurch höhere Temperaturbeständigkeit erzielt wird.

Aus der EP-A 38 713 sind gleichfalls rußgefüllte leitfähige Polymermassen für Schaltkreis-Schutzeinrichtungen, jedoch mit einem oder mehreren anorganischen Additiven wie Aluminiumtrihydrat und Magnesiumhydrat bekannt geworden, welche die Kriechstromfestigkeit der leitfähigen Masse verbessern, ohne deren spezifischen Widerstand zu erhöhen.

Auch die EP-A 38 714 beschäftigt sich mit einer leitfähigen Polymermischung, die jedoch neben Ruß noch Metall-Partikel als zweiten leitfähigen Füllstoff aufweist und zur Herstellung von Vorrichtungen geeignet ist, die nach Anschluß von Elektroden Strom leiten und somit als Heizungen oder aufgrund ihres PTC-Verhaltens als elektrische Schutzeinrichtungen verwendet werden können.

Alle bekannten unverstreckten Folien aus mit leitfähigkeitserhöhenden Substanzen gefüllten Kunststoffen weisen - wie bereits erwähnt - unbefriedigende mechanische Eigenschaften auf und sind daher nur sehr begrenzt einsetzbar.

Aus der GB-PS 2 026 942 ist ein Folienlaminat aus wenigstens zwei Filmen aus Polyäthylen hoher Dichte (HDPE) bekannt geworden, wobei jeder Film monoaxial

- 4 -

0119982

mit einem Streckverhältnis von 2,2 bis 4,2 verstreckt ist und wenigstens einer der Filme ein lichtabschirmendes Pigment - vorzugsweise Ruß - enthält. Die Verstreckungsachsen der aneinander liegenden Filmschichten schließen miteinander einen Winkel von $45^{\circ}$ bis $90^{\circ}$ ein. Auf die antistatischen Eigenschaften des Laminates wird hingewiesen, es finden sich jedoch keine Werte für den Oberflächenwiderstand. Der Rußgehalt eines monoaxial verstreckten Films nach der GB-PS ist mit 4,5 % bzw. 6 % angegeben. Über die Beschaffenheit der eingesetzten Rußteilchen wird nichts ausgesagt. Die Herstellung eines solchen Folienlaminates ist relativ aufwendig, HDPE als Matrixmaterial eignet sich nicht für alle Anwendungsfälle. Darüber hinaus sind die elektrischen und mechanischen Eigenschaften des Laminates nicht optimal kombiniert.

Die Erfindung bezweckt die Überwindung der geschilderten Nachteile bekannter Materialien und stellt sich die Aufgabe, Folien bzw. Bändchen zu schaffen, welche neben elektrischer Leitfähigkeit auch optimale Festigkeits- und Dehnungswerte aufweisen.

Folien oder Bändchen der eingangs definierten Art, mit denen die gestellte Aufgabe erfindungsgemäß gelöst wird, sind gekennzeichnet durch
- einen Gehalt von 8 bis 50 % Masse, vorzugsweise 8 bis 30 % Masse, an elektrisch leitfähigem, in der Matrix dispergiertem Ruß,
- einen Oberflächenwiderstand von weniger als $10^8 \Omega$,
- Festigkeitswerte in Verstreckungsrichtung größer als 50 N/mm$^2$ und
- Dehnungswerte in Verstreckungsrichtung von mehr als 20 %.

Als leitfähige Ruße kommen vor allem Ofen- und Acetylenruße, aber auch die weniger gut elektrisch leitenden Thermal- und Kanalruße in entsprechend höheren Zusatzmengen in Frage. Ruße werden herkömmlicherweise durch ihre mittlere Teilchengröße, ihre mittels Stickstoff-Adsorption gemessene spezifische Oberfläche und durch die Werte der Dibutylphthalat-(DBP-)Adsorption $\lceil cm^3$ DBP/100 g Ruß$\rfloor$ charakterisiert. In den adsorptiv bestimmten Werten kommt die Porosität des Rußes und der durchschnittliche Aggregationsgrad der Primärteilchen zum Ausdruck.

Leitfähige Ruße weisen aufgrund ihrer Struktur eine mittels Stickstoff-Adsorption gemessene Oberfläche von etwa 200 bis 1000 $m^2$/g auf, bei Rußen vom graphitischen Typ liegen diese Oberflächen im Bereich von 1 bis 10 $m^2$/g. Einzelheiten über die Bestimmung und Charakterisierung der Rußtypen sind in "Encyclopedia of Industrial Chemical Analysis" 1969, Band 8, Seite 179, John Wiley & Sons, New York, angegeben.

Vorteilhaft besteht die Matrix der Folien oder Bändchen aus Polyäthylen niedriger Dichte (LDPE), linearem Polyäthylen niedriger Dichte (L-LDPE), Polypropylen (PP), Äthylen-Vinylacetat-Copolymerisaten (EVA), Äthylen-Butylacetat-Copolymerisaten (EBA), Äthylen-Äthylacrylat-Copolymerisaten oder Mischungen davon - gegebenenfalls auch gemischt mit Polyäthylen hoher Dichte (HDPE) - oder aus Polyamid und die Folien oder Bändchen weisen eine Stärke von 30 bis 500 $\mu$m, vorzugsweise von 40 bis 200 $\mu$m auf.

Der Durchgangswiderstand erfindungsgemäßer Folien oder Bändchen nach DIN 53482 ist in jedem Fall kleiner als $10^9 \Omega \cdot$ cm, ihre Oberflächenwiderstandswerte liegen insbesondere im Bereich von $10^3$ bis $10^8 \Omega$.

Das erfindungsgemäße Verfahren zur Herstellung der monoaxial verstreckten Folien oder Bändchen auf Kunststoffbasis ist dadurch gekennzeichnet, daß Folien oder Bändchen mit einer Ausgangsstärke von 40 bis 1000 µm aus Polyolefin-Homo- oder Copolymerisaten oder aus Mischungen davon mit darin in einer Menge von 8 bis 50 % Masse, vorzugsweise 8 bis 30 % Masse, dispergiert enthaltenen elektrisch leitfähigen Kohlenstoffteilchen bei Temperaturen zwischen 50 und 180° C und einem Streckverhältnis zwischen 1 : 1,2 und 1 : 10, vorzugsweise zwischen 1 : 1,6 und 1 : 4,0, monoaxial ein- oder mehrstufig verstreckt werden, worauf eine erhaltene verstreckte Folie gewünschtenfalls zu Bändchen zerschnitten wird.

Zunächst werden aus dem elektrisch leitfähige Kohlenstoffteilchen enthaltenden Kunststoff Schlauch- oder Flachfolien nach bekannten Techniken, wie Blasextrusion und Breitschlitzdüsenextrusion in ein Wasserbad oder auf temperierte Walzen (Chill-Roll-Verfahren), erzeugt. Diese Primärfolien können direkt oder nach Zerschneiden zu Bändchen für das erfindungsgemäße Verfahren eingesetzt werden.

Das Verstrecken erfolgt entweder über beheizte Walzen oder Heiztische, in Heißluftöfen oder während des Durchführens der Folien oder Bändchen durch beheizte Bäder.

Elektrisch leitfähige Bändchen können beispielsweise zum Umwickeln von Elektrokabeln dienen, wodurch eine Potential-Ausgleichsschicht entsteht. Infolge der guten mechanischen Eigenschaften der erfindungsgemäßen Bändchen gelingt es, an Wickelmaschinen zur Kabelummantelung vergleichsweise sehr hohe Wickelgeschwindigkeiten einzustellen. Außerdem können die monoaxial verstreckten, leitfähigen Bändchen auf konventionellen Rundwebmaschinen bzw. Flachwebmaschinen in Kette und Schuß zur Herstellung antistatischer Gewebe verarbeitet werden.

Die Erfindung wird durch folgende Beispiele noch näher erläutert:

Beispiel 1:

Eine durch Blasextrusion einer Polymerisatmischung aus 50 % Masse Polypropylen und 35 % Masse Äthylen-Vinylacetat mit 15 % Masse leitfähigem Ruß hergestellte Primärfolie mit einer Dicke von 100 µm wird über beheizte Walzen im Kurzspalt-Streckwerk bei 130°C im Verhältnis 1 : 1,6 verstreckt. Die erhaltene Folie ist 80 µm stark und weist eine Festigkeit von 60 N/mm$^2$ auf. Ihr Oberflächenwiderstand beträgt $2 . 10^4 \Omega$. Dehnung in

Verstreckungsrichtung: 140 %.

Beispiel 2:

Eine durch Breitschlitzdüsenextrusion einer Polymerisatmischung aus 30 % Masse PP und 42 % Masse HDPE mit 28 % Masse Leitfähigkeitsruß in ein Wasserbad erhaltene Primärfolie, deren Dicke 500 µm betrug, wird nach Aufschneiden in Bändchen über einen Heiztisch bei Temperaturen von 112°C im Verhältnis 1 : 4,0 verstreckt. Die Bändchen weisen eine Endstärke von 250 µm, einen Oberflächenwiderstand von $8 . 10^3 \Omega$, eine Festigkeit von 72 N/mm$^2$ und eine Dehnung in Verstreckungsrichtung von 40 % auf.

Beispiel 3:

Eine nach dem Chill-Roll-Verfahren hergestellte Primärfolie mit einer Dicke von 220 µm, bestehend aus 40 % Masse PP, 39 % Masse EVA und 21 % Masse Leitfähig-

0119982

keitsruß wird über beheizte Walzen im Kurzspalt-
Streckwerk bei einer Temperatur von 90° C im Verhältnis
1 : 2,2 verstreckt. Die Folie besitzt eine Endstärke
von 100 µm und einen Oberflächenwiderstand von $4 \cdot 10^3 \Omega$.
Die Festigkeit liegt bei 55 N/mm$^2$, die Dehnung in Verstreckungsrichtung beträgt 120 %.

Patentansprüche:

1. Monoaxial verstreckte Folien oder Bändchen auf Kunststoffbasis mit einem Gehalt an Kohlenstoffteilchen in der Kunststoffmatrix, gekennzeichnet durch
   - einen Gehalt von 8 bis 50 % Masse, vorzugsweise 8 bis 30 % Masse, an elektrisch leitfähigem, in der Matrix dispergiertem Ruß,
   - einen Oberflächenwiderstand von weniger als $10^8 \Omega$ ,
   - Festigkeitswerte in Verstreckungsrichtung größer als 50 N/mm$^2$ und
   - Dehnungswerte in Verstreckungsrichtung von mehr als 20 %.

2. Folien oder Bändchen nach Anspruch 1, dadurch gekennzeichnet, daß deren Matrix aus Polyäthylen niedriger Dichte (LDPE), linearem Polyäthylen niedriger Dichte (L-LDPE), Polypropylen (PP), Äthylen-Vinylacetat-Copolymerisaten (EVA), Äthylen-Butylacetat-Copolymerisaten (EBA), Äthylen-Äthylacrylat-Copolymerisaten oder Mischungen davon, oder aus Polyamid besteht, und daß die Folien oder Bändchen eine Stärke von 30 bis 500 µm, vorzugsweise von 40 bis 200 µm aufweisen.

3. Verfahren zur Herstellung von Folien oder Bändchen nach den Ansprüchen 1 und 2, dadurch gekennzeichnet, daß Folien oder Bändchen mit einer Ausgangsstärke von 40 bis 1000 µm aus Polyolefin-Homo- oder Copolymerisaten oder aus Mischungen davon mit darin in einer Menge von 8 bis 50 % Masse, vorzugsweise 8 bis 30 % Masse, dispergiert enthaltenen elektrisch leitfähigen Kohlenstoffteilchen bei Temperaturen zwischen 50 und 180$^\circ$ C und einem Streckverhältnis zwischen 1 : 1,2 und 1 : 10, vorzugsweise zwischen 1 : 1,6 und 1 : 4,0, monoaxial ein- oder mehrstufig

0119982

verstreckt werden, worauf eine erhaltene verstreckte
Folie gewünschtenfalls zu Bändchen zerschnitten
wird.